# EUROPÄISCHE PATENTANMELDUNG

(11) **EP 1 798 388 A2**
(43) Veröffentlichungstag der Anmeldung: **20.06.2007**
(21) Anmeldenummer: 06025807.6
(22) Anmeldetag: 13.12.2006
(51) Int. Cl.: F01M 13/00

(54) **Einrichtungen zur Entlüftung des Kurbelgehäuses einer Brennkraftmaschine**

(30) Priorität: 14.12.2005 DE 202005019518 U
(71) Anmelder: Hengst GmbH & Co. KG, 48147 Münster (DE)
(72) Erfinder: Herrn Dr. Uwe Meinig, 88348 Bad Saulgau (DE)
(74) Vertreter: Linnemann, Winfried

(57) **Zusammenfassung**

Die Erfindung betrifft Einrichtungen (2) zur Entlüftung des Kurbelgehäuses (11) einer Brennkraftmaschine (1) und zur Entölung von aus dem Kurbelgehäuse (11) abgezogenem Entlüftungsgas, mit einer Entlüftungsleitung (20), die das Kurbelgehäuse (11) mit einem Ansaugtrakt (12) der Brennkraftmaschine (1) verbindet, und mit wenigstens einem Ölnebelabscheider (22) zur Abscheidung von Ölnebel aus dem Entlüftungsgas, wobei der Ölnebelabscheider (22) im Verlauf der Entlüftungsleitung (20) angeordnet ist.

Für die Einrichtungen (2) ist kennzeichnend, daß die Entlüftungsleitung (20) durchgehend einsträngig oder bei einer Mehrzylinderbrennkraftmaschine mehrsträngig ist, daß im Verlauf der Entlüftungsleitung (20) oder ihrer Stränge (20') ein oder mehrere als schnellschaltende Rückschlagventile wirkende Lamellenventile (3) vorgesehen sind, die eine Gasströmung vom Kurbelgehäuse (11) zum Ansaugtrakt (12) zulassen und eine umgekehrte Gasströmung sperren, wobei im Verlauf der Entlüftungsleitung (20) vom Kurbelgehäuse (11) zum Ansaugtrakt (12) das/die Lamellenventil(e) (3), der Ölnebelabscheider (22) und ein Druckregelventil (24) in unterschiedlicher Reihenfolge angeordnet sein können.

## Beschreibung

Die vorliegende Erfindung betrifft Einrichtungen zur Entlüftung des Kurbelgehäuses einer Brennkraftmaschine und zur Entölung von aus dem Kurbelgehäuse abgezogenem Entlüftungsgas, mit einer Entlüftungsleitung, die das Kurbelgehäuse mit einem Ansaugtrakt der Brennkraftmaschine verbindet, mit einem Druckregelventil zur Einstellung eines Kurbelgehäusedrucks in einem gewünschten Druckbereich und mit wenigstens einem Ölnebelabscheider zur Abscheidung von Ölnebel aus dem Entlüftungsgas, wobei das Druckregelventil und der Ölnebelabscheider im Verlauf der Entlüftungsleitung angeordnet sind.

Bei Kurbelgehäuseentlüftungen von modernen Brennkraftmaschinen besteht die gesetzliche Anforderung, daß das Kurbelgehäuseentlüftungsgas nicht in die Umgebung geleitet werden darf, sondern der Verbrennungsluft der Brennkraftmaschine zugeführt werden muß. Um den Ölverbrauch der Brennkraftmaschine niedrig zu halten, Ablagerungen im Ansaug- und Auspufftrakt der Brennkraftmaschine zu minimieren und eine geringe Schadstoffemission der Brennkraftmaschine sicherzustellen, müssen die mit dem Entlüftungsgas mitgeführten Ölpartikel so weit wie möglich aus dem Entlüftungsgas entfernt werden.

Für das Entfernen von Ölpartikeln aus dem Kurbelgehäuseentlüftungsgas sind verschiedene Vorrichtungen durch ihre praktische Verwendung auf dem Gebiet der Brennkraftmaschinen bekannt.

Besonders hohe Abscheidegrade können mit Hilfe von Ölnebelzentrifugen oder Elektroabscheidern erreicht werden, jedoch haben diese Abscheider einen vergleichsweise hohen Bauraumbedarf, benötigen zusätzliche Hilfsenergien für ihren Betrieb und sind in der Herstellung aufwendig.

Um die vorgenannten Nachteile zu vermeiden, werden bei aktuellen Brennkraftmaschinen überwiegend einfachere Abscheider eingesetzt, beispielsweise Vlies- bzw. Wickelabscheider oder Zyklonabscheider. Bei diesen Abscheidern werden die Ölbestandteile durch Trägheitskräfte aus dem Entlüftungsgas abgeschieden. Derartige Abscheider, die als passive Abscheider bezeichnet werden können, benötigen, abgesehen von einer Druckdifferenz über dem Abscheider, keine zusätzlich zugeführte Energie. Beispielsweise lassen sich mit gut ausgelegten Zyklonabscheidern bereits bei einer Druckdifferenz von 10 hPa mehr als 60 % des mit dem Entlüftungsgas mitgeführten Ölnebels abscheiden.

Als nachteilig erweist sich jedoch beim Einsatz der vorgenannten passiven Abscheider, daß sich insbesondere bei modernen Otto- und Diesel-Brennkraftmaschinen hoher Leistungsdichte wegen der zunehmenden Entdrosselung des Luftfilters und des übrigen Ansaugsystems die für die Ölnebelabscheidung nutzbaren Druckdifferenzen zwischen dem Kurbelgehäuse und dem Ansaugtrakt der Brennkraftmaschine immer weiter verringern. Dies hat zur Folge, daß insbesondere bei Dieselmotoren in Kennfeldbereichen niedriger Drehzahlen und bei konventionellen Ottomotoren in Kennfeldbereichen niedriger Drehzahl und hoher Last in vielen Fällen keine zur wirksamen Ölnebelabscheidung ausreichende Druckdifferenz über dem Abscheider zur Verfügung steht.

Eine konkrete Einrichtung der eingangs genannten Art ist beispielsweise aus der DE 100 44 922 A1 bekannt. Das Kurbelgehäuseentlüftungsgas wird bei dieser Einrichtung über eine Entlüftungsleitung vom Kurbelgehäuse der Brennkraftmaschine zu deren Ansaugtrakt geführt, wobei im Verlauf der Entlüftungsleitung ein Ölnebelabscheider und ein nach Maßgabe des im Kurbelgehäuse herrschenden Drucks verstellbares Drosselventil, das auch den Druck im Kurbelgehäuse regelt, angeordnet sind. Auch bei dieser bekannten Einrichtung treten die im vorstehenden Absatz dargelegten Probleme bei geringer Druckdifferenz über dem Abscheider auf, wenn dieser ein passiver Abscheider ist.

Eine Einrichtung für den gleichen Einsatzzweck, die die Probleme einer geringen Druckdifferenz über dem Abscheider und einen damit verbundenen geringen Abscheidegrad vermeidet, ist aus der CH 664 798 A5 bekannt. Bei dieser Einrichtung dient eine aktive Entlüftungsgasfördereinheit dazu, das Entlüftungsgas aktiv aus dem Kurbelgehäuse in Richtung zum Ansaugtrakt der Brennkraftmaschine zu fördern. Die Fördereinheit, z.B. eine Pumpe, stellt allerdings nachteilig eine aufwendige zusätzliche Komponente dar, die für ihren Betrieb außerdem eine Antriebsenergie benötigt.

Für die vorliegende Erfindung stellt sich deshalb die Aufgabe, eine Einrichtung der eingangs genannten Art zu schaffen, die mit einem möglichst geringen technischen Aufwand und ohne die Erfordernis der Zuführung einer Antriebsenergie die zur Ölnebelabscheidung nutzbare Druckdifferenz über dem Ölnebelabscheider vergrößert.

Verschiedene Lösungen dieser Aufgabe gelingen erfindungsgemäß mit Einrichtungen der eingangs genannten Art, die die kennzeichnenden Merkmale eines der Patentansprüche 1 bis 5 aufweisen.

Bei den erfindungsgemäßen Einrichtungen werden vorteilhaft die bei einer Brennkraftmaschine im Betrieb zwangsläufig auftretenden Druckpulsationen genutzt, um die für die Ölnebelabscheidung im Ölnebelabscheider nutzbare Druckdifferenz merklich zu vergrößern. Bei einer Druckdifferenz mit einem kurbelgehäuseseitigen Druck, der höher ist als der ansaugtraktseitige Druck, öffnet das Lamellenventil, auch wenn diese Druckdifferenz nur kurzzeitig vorliegt, und läßt eine Strömung in Richtung des Ansaugtrakts der Brennkraftmaschine zu, während das Lamellenventil bei Anliegen einer entgegengesetzt wirkenden Druckdifferenz spontan schließt und damit eine Rückströmung des Entlüftungsgases verhindert. Wegen der sowohl im Kurbelgehäuse wie auch im Ansaugtrakt wirkenden ausgeprägten Druckpulsationen ist es mit der erfindungsgemäßen Vorrichtung möglich, in kritischen Kennfeldbereichen der Brennkraftmaschine selbst für den Fall, daß eine mittlere Druckdifferenz zwischen dem Kurbelgehäuse und dem Ansaugtrakt zu Null wird, eine Gasströmung vom Kurbelgehäuse in Richtung zum Ansaugtrakt und dabei auch eine für eine wirksame Ölnebelabscheidung nutzbare Druckdifferenz am Ölnebelabscheider zu erzeugen. Bei entsprechender Auslegung schalten Lamellenventile zuverlässig auch bei solchen Gaspulsationsfrequenzen, wie sie im Betrieb der Brennkraftmaschine in Abhängigkeit von deren Drehzahl auftreten. Dabei ist es vorteilhaft, daß das Lamellenventil ein selbsttätig schaltendes Ventil ist, das keine aktiven Elemente für seine Verstellung und damit auch keine Antriebsenergie benötigt. Zudem braucht das Lamellenventil nur einen sehr kleinen Einbauraum, der sich im gesamten Raumbedarf der Einrichtung kaum als zusätzlicher Raumbedarf bemerkbar macht. Aufgrund seiner grundsätzlich relativ einfachen Bauweise läßt sich das Lamellenventil zudem kostengünstig fertigen und führt damit nur zu einer sehr geringen Erhöhung der Kosten für die Herstellung der Einrichtung insgesamt, wobei dem aber ein wesentlicher Gewinn beim Abscheidegrad des Ölnebelabscheiders gegenübersteht.

Die erfindungsgemäßen Einrichtungen können hinsichtlich der Zahl der darin verwendeten Lamellenventile unterschiedlich ausgeführt sein. In einer ersten diesbezüglichen Ausführung der Einrichtungen ist die Entlüftungsleitung durchgehend einsträngig und es ist in deren Verlauf ein einziges Lamellenventil vorgesehen. Hier wird mit einem geringstmöglichen technischen Aufwand, nämlich mit nur einem einzigen Lamellenventil, die verbesserte Abscheidewirkung erzielt, so daß diese Ausführung eine besonders wirtschaftliche Lösung darstellt.

Auch hinsichtlich der Anordnung des Lamellenventils im Verlauf der Entlüftungsleitung bestehen verschiedene Möglichkeiten. In einer ersten diesbezüglichen Ausgestaltung der Einrichtungen ist im Verlauf der Entlüftungsleitung vom Kurbelgehäuse zum Ansaugtrakt zuerst das Lamellenventil, danach der Ölnebelabscheider und danach ein Druckregelventil vorgesehen. Das Lamellenventil liegt in dieser Ausführung der Einrichtungen also nahe zum Kurbelgehäuse der Brennkraftmaschine, so daß die Verstellung des Lamellenventils hier in erster Linie von den im Kurbelgehäuse der Brennkraftmaschine auftretenden Druckpulsationen bestimmt wird.

Eine dazu alternative Ausgestaltung der Einrichtung schlägt vor, daß im Verlauf der Entlüftungsleitung vom Kurbelgehäuse zum Ansaugtrakt zuerst der Ölnebelabscheider, danach das Lamellenventil und danach ein Druckregelventil vorgesehen ist. Hier liegt also das Lamellenventil in einem mittleren Bereich der Entlüftungsleitung, wobei zwischen Kurbelgehäuse und Lamellenventil der Ölnebelabscheider und zwischen Lamellenventil und Ansaugtrakt das Druckregelventil liegt. In dieser Ausführung der Einrichtung wirken sich also sowohl die Druckpulsationen des Kurbelgehäuses als auch die Druckpulsationen im Ansaugtrakt der Brennkraftmaschine auf die Verstellung des Lamellenventils aus. Vorteilhaft ist hier zudem, daß das Lamellenventil nicht mehr mit dem Ölnebel beaufschlagt wird, was für seine zuverlässige Funktion von Vorteil ist.

Eine weitere Alternative schlägt diesbezüglich vor, daß im Verlauf der Entlüftungsleitung vom Kurbelgehäuse zum Ansaugtrakt zuerst der Ölnebelabscheider, danach ein Druckregelventil und danach das Lamellenventil vorgesehen ist. In dieser Ausführung der Einrichtung liegt also das Lamellenventil nahe dem Ansaugtrakt der Brennkraftmaschine, wodurch hier der Einfluß der Druckpulsationen im Ansaugtrakt der Brennkraftmaschine in erster Linie die Verstellung des Lamellenventils dominiert.

Bei der im vorhergehenden Absatz angegebenen Ausführung der Einrichtung wirken bei der einsträngigen Entlüftungsleitung auf das Lamellenventil die von sämtlichen Zylindern der Brennkraftmaschine hervorgerufenen, einander überlagernden Druckpulsationen im Ansaugtrakt ein. Bei einer in dieser Hinsicht geänderten Ausführung der Einrichtung für eine Brennkraftmaschine mit mehreren Zylindern ist vorgesehen, daß die Entlüftungsleitung zumindest über einen in Richtung vom Kurbelgehäuse zum Ansaugtrakt gesehen letzten Teil ihrer Länge mehrsträngig ausgeführt ist, wobei jedem Zylinder je ein Strang zugeordnet ist und in jedem Strang je ein eigenes Lamellenventil angeordnet ist. In dieser Ausführung der Einrichtung dominiert also jeweils die Druckpulsation nur eines Zylinders die Verstellung des zugeordnete Lamellenventil. Hierdurch kann ein verbesserter Wirkungsgrad erreicht werden, weil eine gegenseitige Ausmittelung und Dämpfung der Druckpulsationen mehrerer Zylinder hier nicht erfolgen kann und das Lamellenventil nicht durchsatzmindernd auf höchste Eigenfrequenz ausgelegt werden muß. Auf der anderen Seite steht dem ein höherer technischer Aufwand gegenüber, da hier eine der Zahl der Zylinder entsprechende Anzahl von Entlüftungsleitungssträngen und Lamellenventilen benötigt wird.

Eine dazu alternative Ausgestaltung der Einrichtung, ebenfalls für eine Brennkraftmaschine mit mehreren Zylindern, sieht vor, daß die Entlüftungsleitung zumindest über einen in Richtung vom Kurbelgehäuse zum Ansaugtrakt gesehen letzten Teil ihrer Länge mehrsträngig ausgeführt ist, wobei zwei oder mehr Gruppen aus jeweils zwei oder mehr Zylindern je ein Strang zugeordnet ist und in jedem Strang je ein eigenes Lamellenventil angeordnet ist. Diese Ausführung der Einrichtung stellt eine Kompromißlösung zwischen einer insgesamt einsträngigen Entlüftungsleitung mit einem einzigen Lamellenventil und der im vorstehenden Absatz angegebenen Ausführung der Einrichtung dar. Durch geeignete Zusammenfassung der Zylinder zu Gruppen kann bei Berücksichtigung der Zünd- bzw. Saugfolge bei Mehrzylindermotoren auch hier ein sehr guter Wirkungsgrad erzielt werden, wobei der technische Aufwand im Vergleich zu der im vorstehenden Absatz angegebenen Einrichtung deutlich vermindert ist.

Um auch bei den beiden zuletzt angegebenen Ausführungen der Einrichtung mit einem einzigen Ölnebelabscheider und einem einzigen Druckregelventil auszukommen, sind erfindungsgemäß bevorzugt im Verlauf der Entlüftungsleitung vom Kurbelgehäuse zum Ansaugtrakt zuerst der Ölnebelabscheider und danach das Druckregelventil in einem einsträngigen Abschnitt der Entlüftungsleitung vorgesehen und danach die Lamellenventile in den mehreren Strängen der Entlüftungsleitung vorgesehen.

Die Lamellenventile können im Saugrohr bzw. Ansaugtrakt, in einem Zylinderkopf in einer Ventilhaube, im Druckregelventil oder Ölnebelabscheider oder in einem separaten Modul angeordnet bzw. darin integriert werden.

Um auch bei Ausführungen der Einrichtung mit einem mehrsträngigen letzten Teil der Entlüftungsleitung eine einfache und kompakte Bauweise der Einrichtung zu gewährleisten, sind bevorzugt ein die Entlüftungsleitung von einem Strang auf die mehreren Stränge verzweigendes Verteilerstück und die Lamellenventile in den mehreren Strängen in einem mit Leitungsanschlüssen versehenen Bauteil zusammengefaßt.

Eine besonders einfache Bauweise wird erreicht, wenn jedes Lamellenventil eine einzige, einseitig eingespannte Ventilzunge aufweist. Diese Ausführung des Lamellenventils oder der Lamellenventile ist insbesondere dann zweckmäßig, wenn der durch das Lamellenventil maximal durchzusetzende Gasvolumenstrom eine relativ kleine Größe hat.

Alternativ kann jedes Lamellenventil zwei spiegelsymmetrisch zueinander angeordnete, jeweils einseitig eingespannte Ventilzungen aufweisen. In dieser Ausführung ist zwar der Aufwand durch den Einsatz zweier Ventilzungen höher, jedoch kann auf diese Weise ein größerer maximaler Gasvolumenstrom durchgesetzt werden, ohne daß sich dies nachteilig auf die Schaltfrequenz des Lamellenventils auswirkt. Hierbei wird ausgenutzt, daß ein Lamellenventil mit zwei kleineren Ventilzungen schneller schalten kann als ein Lamellenventil mit einer entsprechend größeren Ventilzunge bei gleichem maximal möglichen Volumenstromdurchlaß.

Da bei einem Lamellenventil die der Ventilzunge eigene Flexibilität und Elastizität für die Ventilfunktion genutzt wird, ist erfindungsgemäß zweckmäßig jeder Ventilzunge ein einen Durchlaßquerschnitt umgrenzender Ventilsitz, an den sich die Ventilzunge in ihrer Schließstellung flach anlegt, und ein gebogen und schräg zum Ventilsitz verlaufender Ventilzungenanschlag, an den sich die Ventilzunge in ihrer Öffnungsstellung gebogen und flächig anlegt, zugeordnet. In einem differenzdrucklosen Zustand nimmt also die Ventilzunge ihre Schließstellung ein, wodurch gewährleistet ist, daß bei Stillstand der Brennkraftmaschine eine Gasströmung oder -diffusion vom Kurbelgehäuse in den Ansaugtrakt ausgeschlossen ist. Damit wird auch ausgeschlossen, daß es im Ansaugtrakt zu einer Beschädigung von dort angeordneten Elementen, wie z. B. einem Luftmengenmesser, durch daran abgelagerte Öltröpfchen oder Kondensate kommen kann. Ein Öffnen des Lamellenventils erfolgt erst bei Vorliegen einer in Öffnungsrichtung wirkenden Druckdifferenz. Eine Überbeanspruchung der Ventilzunge wird durch den passend geformten Ventilzungenanschlag vermieden, womit eine ausreichende Betriebssicherheit und Standzeit des Lamellenventils gewährleistet wird.

Zwecks Erzielung einer guten Abdichtung und einer mechanischen Schonung der Ventilzunge bei Erreichen ihrer Schließstellung ist bevorzugt der Ventilsitz als elastomerbeschichteter Dichtsitz ausgeführt.

Um einerseits die benötigte hohe Schaltfrequenz und andererseits eine ausreichende Lebensdauer des Lamellenventils zu gewährleisten, besteht bevorzugt die/jede Ventilzunge aus Federstahlblech in einer Dicke zwischen 0,05 und 0,25 mm.

Eine Alternative stellen hier Ventilzungen aus Epoxydharz, vorzugsweise mit Glasfaserverstärkung, oder aus faserverstärkten Kunststoffen dar.

Schließlich schlägt die Erfindung noch vor, daß die Einrichtung zum Teil oder vollständig in einer Zylinderkopfhaube, im Saugrohr bzw. Ansaugtrakt, in einem Zylinderkopf in einer Ventilhaube, im Druckregelventil oder im Ölnebelabscheider oder in einem separaten Modul der Brennkraftmaschine angeordnet bzw. integriert ist. Damit wird eine platzsparende und herstellungstechnisch günstige Unterbringung der Einrichtung erreicht.

Im folgenden werden Ausführungsbeispiele der erfindungsgemäßen Einrichtung anhand einer Zeichnung erläutert. Die Figuren der Zeichnung zeigen:
- Figur 1: eine erste Einrichtung, zusammen mit einer Brennkraftmaschine, in einer schematischen Darstellung,
- Figur 2: die Einrichtung in einer zweiten Ausführung in gleicher Darstellung wie in Figur 1,
- Figur 3: die Einrichtung in einer dritten Ausführung, wieder in gleicher Darstellung wie in Figur 1,
- Figur 4: eine weitere Ausführung der Einrichtung, ebenfalls zusammen mit einer Brennkraftmaschine, in einer schematischen Darstellung,
- Figur 5: die Einrichtung in einer weiteren Ausführung in gleicher Darstellungsweise wie in Figur 4,
- Figur 6: ein Lamellenventil als Teil der Einrichtung in einer ersten Ausführung in einem vergrößerten Längsschnitt und
- Figur 7: das Lamellenventil in einer zweiten Ausführung, in gleicher Darstellungsweise wie in Figur 6.

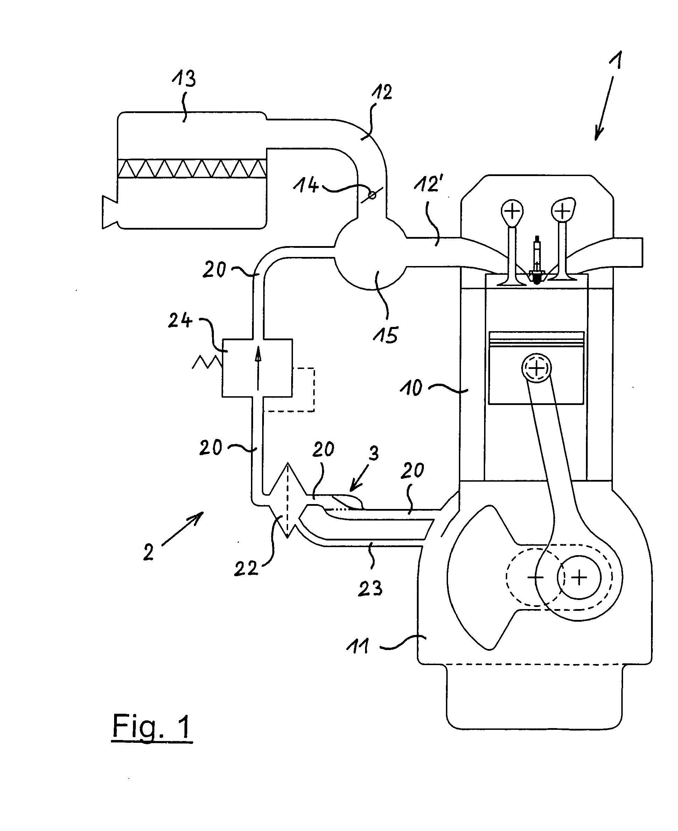

Figur 1 der Zeichnung zeigt rechts in schematischer Darstellung eine Brennkraftmaschine 1 im Querschnitt, die mehrere, in Reihe hintereinander angeordnete Zylinder 10 und in ihrem unteren Teil ein Kurbelgehäuse 11 besitzt.

Links oben in Figur 1 ist ein Luftfilter 13 dargestellt, das über einen Ansaugtrakt 12 mit der Ansaugseite der Brennkraftmaschine 1 verbunden ist. Im Verlauf des Ansaugtrakts 12 ist hinter dem Luftfilter 13 eine Drosselklappe 14 angeordnet. In Strömungsrichtung der Ansaugluft vom Luftfilter 13 zur Brennkraftmaschine 1 folgt hinter der Drosselklappe 14 hier ein Luftverteiler 15, über den die Ansaugluft auf mehrere Ansaugkanäle 12' der Brennkraftmaschine 1 verteilt wird. Da die Ansaugkanäle 12' in Figur 1 hintereinander liegen, ist nur einer der Ansaugkanäle 12' sichtbar.

Der Brennkraftmaschine 1 ist eine Einrichtung 2 zur Entlüftung des Kurbelgehäuses 11 und zur Entölung des aus dem Kurbelgehäuse 11 abgezogenen Entlüftungsgases zugeordnet. Die Einrichtung 2 umfaßt zunächst eine Entlüftungsleitung 20, die vom Kurbelgehäuse 11 der Brennkraftmaschine 1 zum Ansaugtrakt 12, hier zu dessen Luftverteiler 15, geführt ist.

Im Verlauf der Entlüftungsleitung 20 sind drei Komponenten angeordnet, nämlich ein Lamellenventil 3, ein Ölnebelabscheider 22 und ein Druckregelventil 24. Bei dem Beispiel der Einrichtung 2 gemäß Figur 1 sind das Lamellenventil 3, der Ölnebelabscheider 22 und das Druckregelventil 24 in dieser Reihenfolge im Verlauf der Entlüftungsleitung 20 vom Kurbelgehäuse 11 zum Ansaugtrakt 12 hintereinander angeordnet. Vom Ölnebelabscheider 22 führt eine Ölrückführleitung 23 abgeschiedenes Öl zurück in das Kurbelgehäuse 11.

Das Lamellenventil 3 in der Entlüftungsleitung 20 bildet ein schnellschaltendes Rückschlagventil, das sehr schnell eine Gasströmung in Richtung vom Kurbelgehäuse 11 zum Ansaugtrakt 12 freigibt, sobald kurbelgehäuseseitig vom Lamellenventil 3 ein höherer Gasdruck herrscht als auf der anderen Seite des Lamellenventils 3. Auf diese Weise werden Druckpulsationen, die im Betrieb der Brennkraftmaschine 1 in deren Kurbelgehäuse 11 zwangsläufig auftreten, zur Erhöhung der für eine Ölnebelabscheidung im Ölnebelabscheider 22 nutzbaren Druckdifferenz ausgenutzt. Die effektiv am Ölnebelabscheider 20 anstehende Druckdifferenz wird im Vergleich zu einer ansonsten gleichen Einrichtung 2 ohne Lamellenventil 3 merklich vergrößert, wodurch sich in entsprechendem Maße auch der Abscheidegrad des Ölnebelabscheiders 22 erhöht. Es kann also mit dem technisch relativ einfachen Lamellenventil 3 der Abscheidegrad des passiven Ölnebelabscheiders 22 deutlich erhöht werden. Aktive, eine Antriebsenergie benötigende Elemente für eine Förderung des Gasstroms werden hier nicht benötigt.

Das im weiteren Verlauf der Entlüftungsleitung 20 angeordnete Druckregelventil 24 ist von an sich bekannter Ausführung und sorgt dafür, daß im Kurbelgehäuse 11 ein durch gesetzliche Auflagen vorgegebener und aus technischen Gründen erforderlicher geringer Unterdruck gegenüber dem umgebenden atmosphärischen Druck eingehalten wird.

Ein störendes Zurückströmen von Gas durch die Entlüftungsleitung 20 in Richtung zum Kurbelgehäuse 11 wird durch das Lamellenventil 3 sicher verhindert.

Die Ölrückführleitung 23 ist durch ein geeignetes, an sich bekanntes, in der Zeichnung nicht eigens dargestelltes Mittel, wie einen Siphon oder ein Blattventil, gegen eine unerwünschte Gasdurchströmung gesichert.

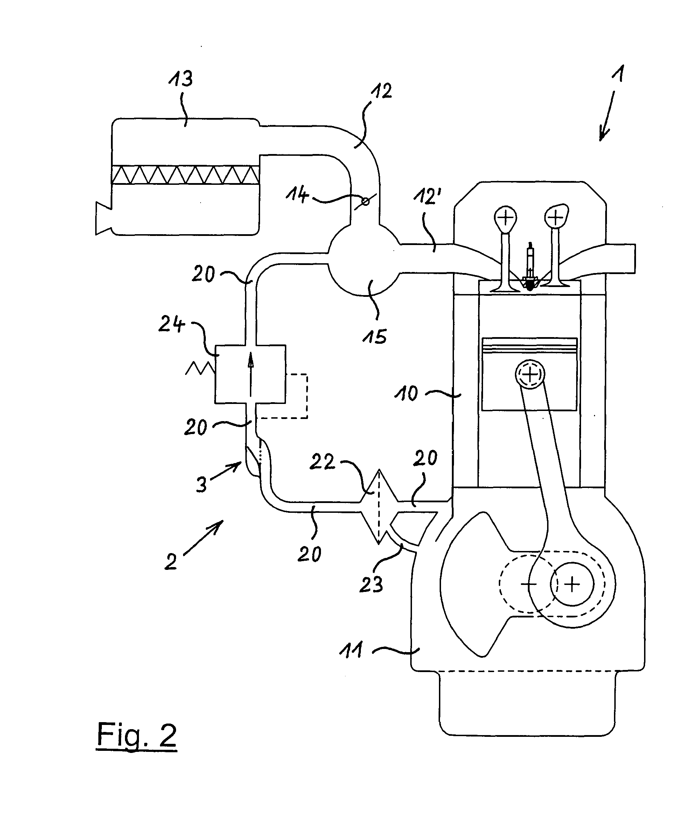

Figur 2 zeigt eine Ausführung der Einrichtung 2, die sich von dem Beispiel gemäß Figur 1 dadurch unterscheidet, daß das Lamellenventil in seiner Position versetzt ist. Bei dem Beispiel gemäß Figur 2 liegt das Lamellenventil 3 nun in einem Abschnitt der Entlüftungsleitung 20 zwischen dem Ölnebelabscheider 22 und dem Druckregelventil 24. Während bei dem Beispiel gemäß Figur 1 das Lamellenventil 3 in erster Linie von den Druckpulsationen des Kurbelgehäuses 11 betätigt wird, wird bei dem Beispiel gemäß Figur 2 das Lamellenventil 3 aufgrund seiner zentralen Lage in der Entlüftungsleitung 20 sowohl von den Druckpulsationen im Kurbelgehäuse 11 als auch von den Druckpulsationen im Ansaugtrakt 12, im Luftverteiler 15 und in den Ansaugkanälen 12' der Brennkraftmaschine 1 in seiner Funktion beeinflußt. Auch bei der Einrichtung 2 gemäß Figur 2 wird über das Lamellenventil 3 erreicht, daß die für die Ölnebelabscheidung im Ölnebelabscheider 22 nutzbare Druckdifferenz vergrößert wird.

Bei den vorstehend beschriebenen ersten zwei Ausführungsbeispielen der Einrichtung 2 ist jeweils eine einzige Entlüftungsleitung 20 mit einem einzigen in deren Verlauf angeordneten Lamellenventil 3 vorgesehen.

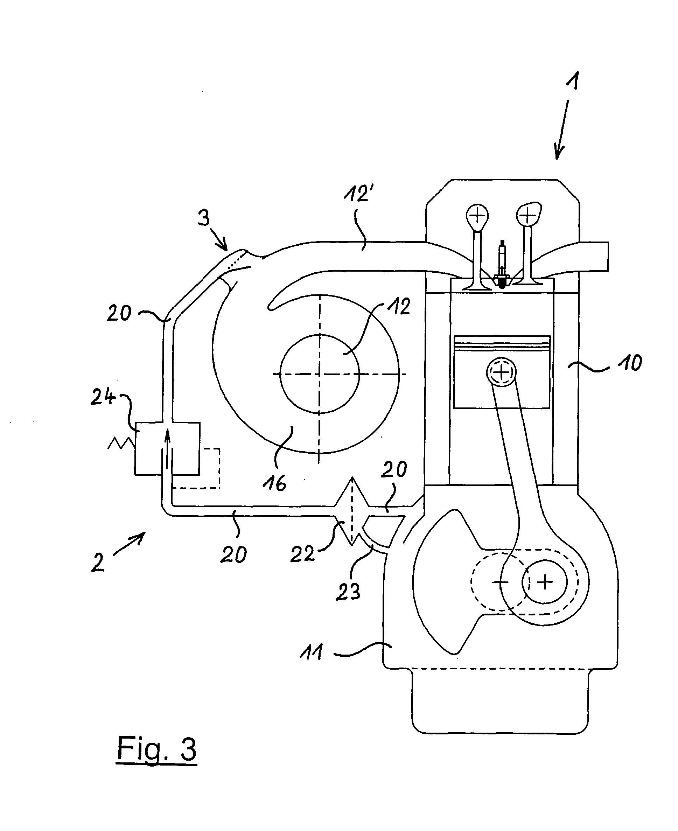

Figur 3 zeigt eine Ausführung der Einrichtung 2 an einer mit einem Saugrohrsammler 16 ausgestatteten mehrzylindrigen Brennkraftmaschine 1. Auch bei der in Figur 3 gezeigten Brennkraftmaschine 1 führt die Entlüftungsleitung 20 vom Kurbelgehäuse 11 der Brennkraftmaschine 1 zu deren Ansaugtrakt 12, wobei die Entlüftungsleitung zunächst einsträngig ist und sich dann aber in ihrem Bereich vor dem Saugrohrsammler 16 in mehrere Stränge 20' verzweigt.

Der Ansaugtrakt 12 umfaßt hier den Saugrohrsammler 16, der von einem hier nicht sichtbaren Luftfilter mit Luft versorgt wird. Vom Saugrohrsammler 16 führen mehrere, in ihrer Zahl der Zylinderzahl entsprechende Ansaugkanäle 12' des Ansaugtrakts 12 zu den einzelnen Lufteinlässen der Zylinder 10 der Brennkraftmaschine 1. Da in der für Figur 3 gewählten Ansicht die Stränge 20' der Entlüftungsleitung 20 und die Ansaugkanäle 12' des Ansaugtrakts 12 hintereinander liegen, ist hier jeweils nur einer der Stränge 20' und einer der Ansaugkanäle 12' erkennbar.

Die Einmündung der Entlüftungsleitungsstränge 20' in den Ansaugtrakt 12 liegt jeweils im Übergangsbereich vom Saugrohrsammler 16 zu den einzelnen Ansaugkanälen 12' zu den Zylindern 10; an diesen Stellen ist bei dem gezeigten Ausführungsbeispiel gemäß Figur 3 jeweils ein Lamellenventil 3 angeordnet. Da auch die Lamellenventile 3 hier hintereinander liegen, ist nur das Lamellenventil 3 eines Zylinders sichtbar. Auf das jeweilige Lamellenventil 3 wirken bei diesem Ausführungsbeispiel insbesondere Druckpulsationen ein, die an der Ansaugseite des zugehörigen Zylinders 10, also im betreffenden Ansaugtraktstrang 12', der Brennkraftmaschine 1 in deren Betrieb auftreten.

Im Verlauf der Entlüftungsleitung 20 ist in der Richtung vom Kurbelgehäuse 11 zum Ansaugtrakt 12 gesehen zunächst der Ölnebelabscheider 22 angeordnet, der über die Ölrückführleitung 23 zur Rückleitung des abgeschiedenen Öls mit dem Kurbelgehäuse 11 verbunden ist.

Im weiteren Verlauf der Entlüftungsleitung 20 ist dann das Druckregelventil 24 angeordnet, das hier ebenfalls von an sich bekannter Ausführung ist und zur Einstellung eines gewünschten geringen Unterdrucks im Kurbelgehäuse 11 dient.

Wie bei den beiden zuvor beschriebenen Einrichtungen 2 sorgen bei der Einrichtung 2 gemäß Figur 3 die Lamellenventil 3 dafür, daß die für die Ölnebelabscheidung im passiven Ölnebelabscheider 22 nutzbare Druckdifferenz vergrößert wird.

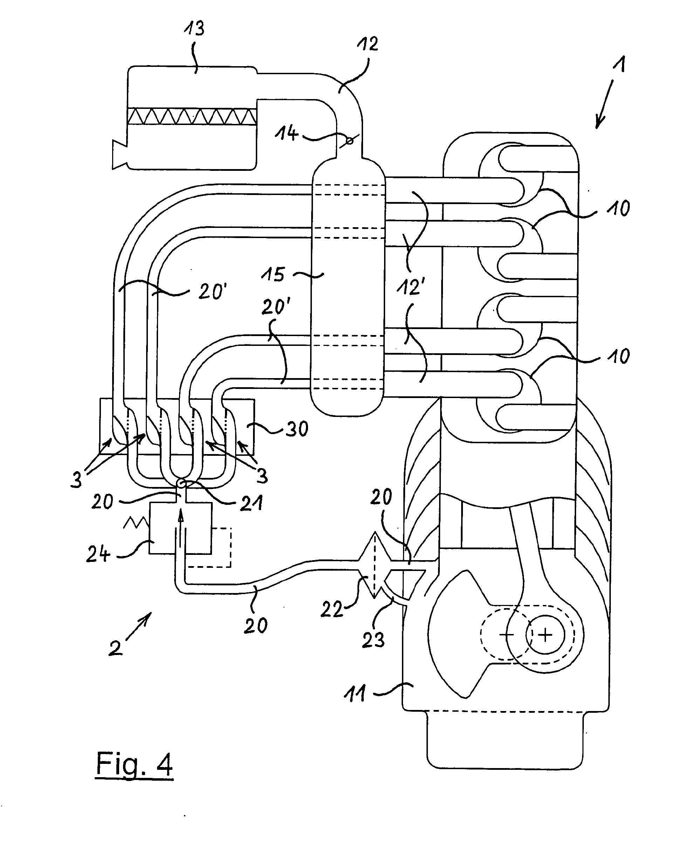

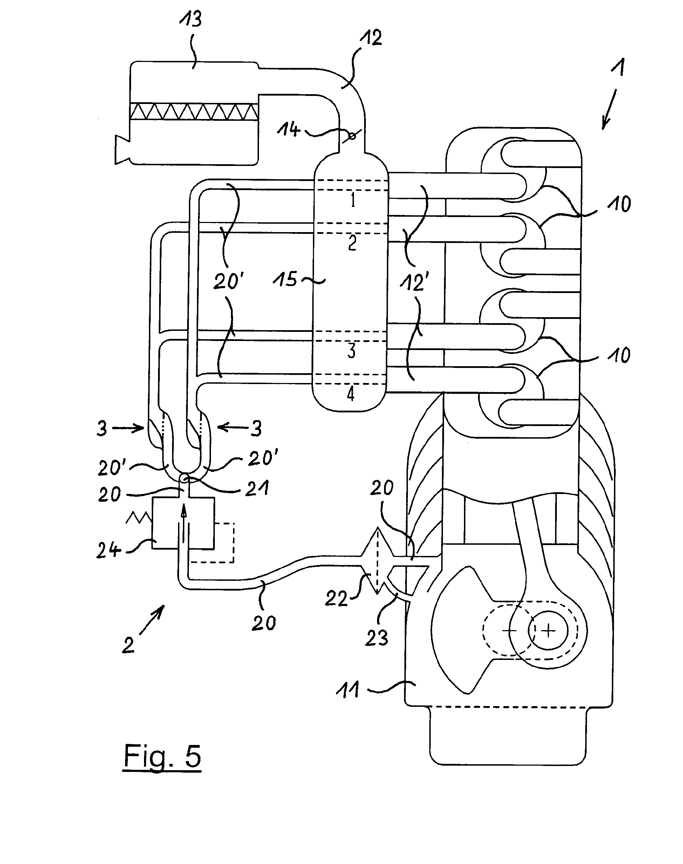

Die im folgenden beschriebenen Ausführungsbeispiele gemäß den Figuren 4 und 5 weisen ebenfalls mehrere Lamellenventile 3 auf.

Bei dem Ausführungsbeispiel der Einrichtung 2 gemäß Figur 4 verläuft die Entlüftungsleitung 20 zunächst als einsträngige Leitung vom Kurbelgehäuse 11 über den Ölnebelabscheider 22 zum Druckregelventil 24. Zur Ölrückführung ist auch hier der Ölnebelabscheider 22 über die Ölrückführleitung 23 mit dem Kurbelgehäuse 11 verbunden.

Stromab des Druckregelventils 24 ist ein Verteilerstück 21 in die Entlüftungsleitung 20 eingesetzt, mit welchem die zunächst einsträngige Entlüftungsleitung 20 in hier insgesamt vier Stränge 20' aufgeteilt wird, wobei die Zahl der Stränge 20' hier der Zahl der Zylinder 10 der Brennkraftmaschine 1 entspricht. In jedem Strang 20' ist jeweils ein eigenes Lamellenventil 3 vorgesehen, wobei hier die insgesamt vier Lamellenventile 3, entsprechend der Anzahl von vier Zylindern 10 der Brennkraftmaschine 1, zu einer Ventilgruppe 30 zusammengefaßt und kompakt angeordnet sind.

In ihrem weiteren Verlauf führen die Stränge 20' jeweils zum Einlaß jeweils eines der vier Zylinder 10 der Brennkraftmaschine 1, wobei die Stränge 20' den auch hier vorgesehenen Luftverteiler 15 im Ansaugtrakt 12 umgehen. Dabei münden die einzelnen Entlüftungsleitungsstränge 20' jeweils in einen von vier Ansaugtraktsträngen 12', die aus dem Luftverteiler 15 zu den einzelnen Zylindern 10 abgehen.

Wie schon bei den Ausführungsbeispielen gemäß den Figuren 1 und 2 ist bei dem Ausführungsbeispiel gemäß Figur 4 ein Luftfilter 13 vorgesehen, von dem der Ansaugtrakt 12 zunächst zum Luftverteiler 15 führt. Im Verlauf des Ansaugtrakts 12 ist zwischen Luftfilter 13 und Luftverteiler 15 die Drosselklappe 14 angeordnet. Vom Luftverteiler 15 gehen die vier Ansaugtraktstränge 12' zur Ansaugseite der Brennkraftmaschine 1. In diese Ansaugtraktstränge 12' münden die einzelnen Stränge 20' der Entlüftungsleitung 20 ein, so daß hier jedes Lamellenventil 3 jeweils einem der vier Zylinder 10 der Brennkraftmaschine 1 zugeordnet ist und von den von dem jeweiligen Zylinder 10 verursachten Druckpulsationen individuell beaufschlagt ist. Damit werden die im Betrieb der Brennkraftmaschine 1 ansaugseitig erzeugten Druckpulsationen maximal ausgenutzt, weil eine gegenseitige Überlagerung und damit eine mögliche gegenseitige Ausmittelung der Druckpulsationen hier an der dem Ansaugtrakt 12 zugewandten Seite der Lamellenventile 3 nicht auftreten kann. Damit wird bei der Einrichtung 2 gemäß Figur 4 der für die Ölnebelabscheidung im passiven Ölnebelabscheider 22 nutzbare Differenzdruck im besonders deutlichen Maße erhöht.

Wie die Figur 4 veranschaulicht, werden bei dem dort gezeigten Ausführungsbeispiel der Einrichtung 2 so viele Lamellenventile 3 benötigt, wie die Brennkraftmaschine 1 Zylinder 10 hat. Figur 5 zeigt nun ein Ausführungsbeispiel der Einrichtung 2, die im Vergleich dazu mit der halben Zahl von Lamellenventilen 3 auskommt.

Auch bei dem Beispiel der Einrichtung 2 gemäß Figur 5 ist die Entlüftungsleitung 20 als zunächst einsträngige Leitung vom Kurbelgehäuse 11 der Brennkraftmaschine 1 über den Ölnebelabscheider 22 zum Druckregelventil 24 geführt. Zur Ölrückführung aus dem Ölnebelabscheider 22 in das Kurbelgehäuse 11 dient auch hier die Ölrückführleitung 23.

Hinter dem Druckregelventil 24 wird die Entlüftungsleitung 20 in einem Verteilerstück 21 zunächst in zwei Stränge 20' aufgeteilt, wobei in jedem dieser beiden Stränge 20' ein Lamellenventil 3 angeordnet ist. In Strömungsrichtung des Entlüftungsgases hinter den beiden Lamellenventilen 3 wird jeder Strang 20' nochmals verzweigt, wodurch sich dann für den letzten Abschnitt der Entlüftungsleitung insgesamt vier Entlüftungsleitungsstränge 20', entsprechend der Anzahl von vier Zylindern 10 der Brennkraftmaschine 1, ergeben. Die vier den letzten Abschnitt der Entlüftungsleitung 20 bildenden Stränge 20' sind wieder jeweils einem der vier Zylinder 10 zugeordnet. Die gemeinsame Einleitung des Entlüftungsgases in die Zylinder 1 und 4 sowie 2 und 3 berücksichtigt die Zündfolge (1-3-4-2) des Vierzylindermotors und bewirkt für beide Lamellenventile die gleichen Bedingungen.

Zur Versorgung der Brennkraftmaschine 1 mit Verbrennungsluft dient auch hier ein Luftfilter 13, der über den Ansaugtrakt 12 und über den Luftverteiler 15, von dem vier Ansaugtraktstränge 12' zu den einzelnen Zylindern 10 führen, mit den Lufteinlässen der Brennkraftmaschine 1 verbunden ist. Die vier den letzten Abschnitt der Entlüftungsleitung 20 bildenden Stränge 20' münden unter Umgehung des Luftverteilers 15 unmittelbar in die vier Ansaugtraktstränge 12'.

In dem in Figur 5 gezeigten Beispiel sind die Entlüftungsleitungsstränge 20', die über das in Figur 5 rechte Lamellenventil 3 laufen, dem ersten und dem vierten Zylinder 10 der Brennkraftmaschine 1 zugeordnet, während die Entlüftungsleitungsstränge 20', die über das in Figur 5 links liegende Lamellenventil 3 laufen, dem zweiten und dem dritten Zylinder 10 der Brennkraftmaschine 1 zugeordnet sind. Die Zuordnung der Entlüftungsleitungsstränge 20' zu den verschiedenen Zylindern 10 ist zweckmäßig so getroffen, daß sich die bei den zusammengefaßten Zylindern 10 auftretenden Druckpulsationen im Sinne einer Pulsationsvergrößerung überlagern. So wird auch hier ein guter Wirkungsgrad der Ölnebelabscheidung durch Vergrößerung der nutzbaren Druckdifferenz erzielt, auch wenn nur zwei Lamellenventile 3 eingesetzt werden.

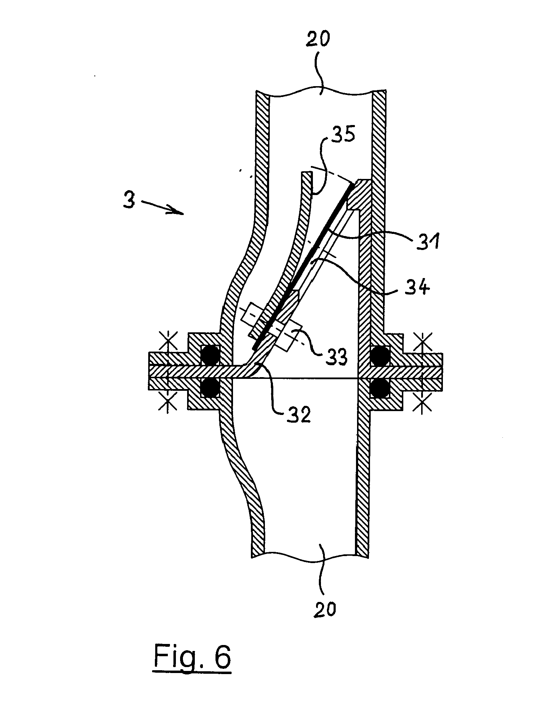

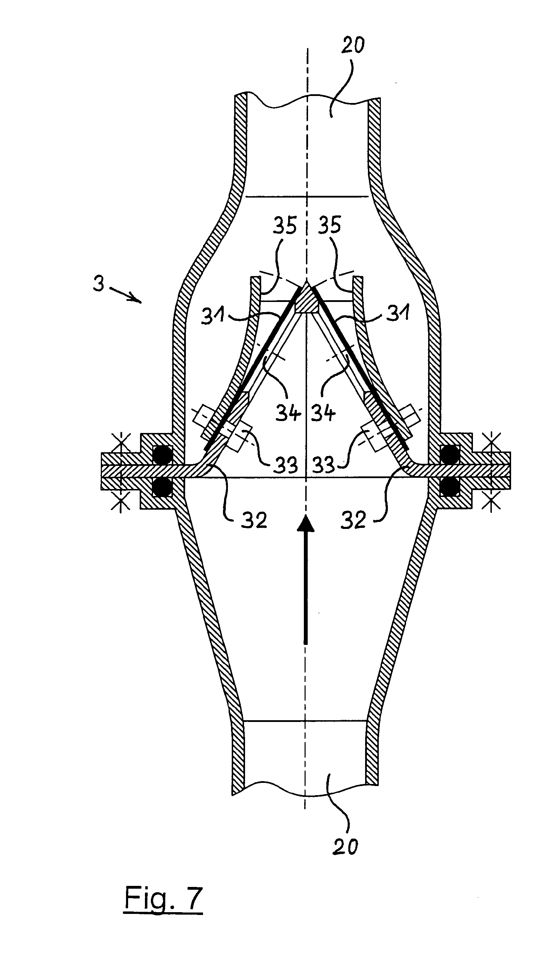

Die Figuren 6 und 7 zeigen zwei Ausführungsbeispiele eines Lamellenventils 3 als Teil der zuvor beschriebenen Einrichtungen 2.

Das erste Beispiel eines Lamellenventils 3 gemäß Figur 6 zeigt im Längsschnitt einen Ausschnitt aus der Entlüftungsleitung 20 mit dem darin angeordneten Lamellenventil 3. Das Lamellenventil 3 besteht aus einer Ventil zunge 31, die z. B. aus einem Federstahlblech gebildet ist. Dabei ist in Figur 6 das Lamellenventil 3 in seiner Schließstellung gezeigt. In dieser Schließstellung liegt die Ventilzunge 31 flach an einem Ventilsitz 34 an, der einen Durchströmquerschnitt umgibt. In Schließstellung der Ventilzunge 31 ist dieser Durchströmquerschnitt verschlossen.

Wenn unterhalb des Lamellenventils 3 in der Entlüftungsleitung 20 ein Gasdruck herrscht, der auch nur kurzzeitig, nämlich im Rahmen von Druckpulsationen, höher ist als der Gasdruck in der Entlüftungsleitung 20 oberhalb des Lamellenventils 3, wird die Ventilzunge 31 infolge der anstehenden Druckdifferenz unter elastisch-flexibler Verformung von ihrem Ventilsitz 34 abgehoben, wodurch das Lamellenventil 3 sehr schnell öffnet. Im vollständig geöffneten Zustand liegt die Ventilzunge 31 flächig an einem gebogen und schräg zur Ebene des Ventilsitzes 34 verlaufenden Ventilzungenanschlag 35 an. Hierdurch wird eine schädliche, zu scharfe Abbiegung der Ventilzunge 31 vermieden. Bei fehlender oder umgekehrter Druckdifferenz schließt das Lamellenventil 3 sehr schnell; es ist also in der Lage, mit einer Frequenz zu öffnen und zu schließen, die mindestens so groß ist wie die Frequenz der in der Entlüftungsleitung 20 auftretenden Druckpulsationen.

Die Ventilzunge 31 ist hier an ihrem in der Zeichnung unteren Rand an einem Zungenträger 32 mittels einer Zungeneinspannung 33 gehaltert. Die Zungeneinspannung 33 kann z.B. durch eine oder mehrere Schrauben oder Nieten gebildet sein, wobei die Zungeneinspannung 33 hier zugleich neben der Ventilzunge 31 auch den Ventilzungenanschlag 35 mit dem Zungenträger 32 verbindet.

Bei dem Lamellenventil 3 gemäß Figur 6 umfaßt dieses eine einzige Ventilzunge 31; bei dem zweiten Beispiel eines Lamellenventils 3 gemäß Figur 7 umfaßt das Lamellenventil 3 zwei Ventilzungen 31. Die beiden Ventilzungen 31 sowie die zugehörigen zwei Ventilsitze 34 und die Ventilzungenanschläge 35 sind symmetrisch zu einer Mittelebene angeordnet, wie die Figur 7 in dem Längsschnitt durch das Lamellenventil 3 deutlich zeigt. Die Strömungsrichtung des Entlüftungsgases durch die Entlüftungsleitung 20 und das Lamellenventil 3 ist durch den im unteren Teil der Zeichnungsfigur 7 dargestellten Strömungspfeil veranschaulicht.

In Figur 7 ist das Lamellenventil 3 in seinem geschlossenen Zustand dargestellt. Sobald unterhalb des Lamellenventils 3 in der Entlüftungsleitung 20 ein höherer Gasdruck als oberhalb des Lamellenventils 3 herrscht, wird das Lamellenventil 3 geöffnet, indem die beiden Ventilzungen 31 von ihrem jeweils zugehörigen Ventilsitz 34 unter elastisch-flexibler Verformung abgehoben werden. Im vollständig geöffneten Zustand legen sich auch hier die beiden Ventilzungen 31 flächig an gebogen und schräg zu dem jeweiligen Ventilsitz 34 verlaufende Ventilzungenanschläge 35 an. Auch hier ist die Verstellfrequenz des Lamellenventils 3 mindestens so groß wie die Frequenz der in der Entlüftungsleitung 20 auftretenden Druckpulsationen, die im wesentlichen von der Drehzahl der Brennkraftmaschine und deren Zylinderzahl abhängt.

Die Ventilzungen 31 sind auch hier jeweils an ihrer einen, hier unteren Kante eingespannt und an einem Zungenträger 32 jeweils mittels einer Zungeneinspannung 33 befestigt. Die Zungeneinspannung 33 verbindet hier zugleich auch die Ventilzungenanschläge 35 jeweils mit dem zugehörigen Zungenträger 32.

Da bei den beiden Lamellenventilen 3 gemäß den Figuren 6 und 7 die Ventilzungen 31 in etwa gleich groß sind, können beide Lamellenventile 3 bis zu etwa gleich hohen Pulsationsfrequenzen eingesetzt werden, wobei die Lamellenventile 3 selbstverständlich in der Lage sein müssen, bei den Pulsationsfrequenzen, die im Kurbelgehäuse oder im Ansaugtrakt der Brennkraftmaschine auftreten, zuverlässig zu öffnen und zu schließen. Dabei ist das Lamellenventil 3 mit einer Ventilzunge dann sinnvoll, wenn die durchzusetzenden Gasvolumenströme relativ klein sind. Das Lamellenventil 3 gemäß Figur 7 mit zwei Ventilzungen 31 ist dann zweckmäßig einzusetzen, wenn bei gleich hohen Pulsationsfrequenzen ein größerer Gasvolumenstrom durchzusetzen ist.

## Patentansprüche

1. Einrichtung (2) zur Entlüftung des Kurbelgehäuses (11) einer Brennkraftmaschine (1) und zur Entölung von aus dem Kurbelgehäuse (11) abgezogenem Entlüftungsgas, mit einer Entlüftungsleitung (20), die das Kurbelgehäuse (11) mit einem Ansaugtrakt (12) der Brennkraftmaschine (1) verbindet, und mit wenigstens einem Ölnebelabscheider (22) zur Abscheidung von Ölnebel aus dem Entlüftungsgas, wobei der Ölnebelabscheider (22) im Verlauf der Entlüftungsleitung (20) angeordnet ist,
**dadurch gekennzeichnet,**
**daß** die Entlüftungsleitung (20) durchgehend einsträngig ist,
**daß** im Verlauf der Entlüftungsleitung (20) ein als schnellschaltendes Rückschlagventil wirkendes Lamellenventil (3) vorgesehen ist, das abhängig vom Gasdruck beiderseits des Lamellenventils (3) eine Gasströmung in einer Richtung vom Kurbelgehäuse (11) zum Ansaugtrakt (12) zuläßt und eine Gasströmung in einer Richtung vom Ansaugtrakt (12) zum Kurbelgehäuse (11) sperrt, und
**daß** im Verlauf der Entlüftungsleitung (20) vom Kurbelgehäuse (11) zum Ansaugtrakt (12) zuerst das Lamellenventil (3), danach der Ölnebelabscheider (22) und danach ein Druckregelventil (24) vorgesehen ist.

2. Einrichtung (2) zur Entlüftung des Kurbelgehäuses (11) einer Brennkraftmaschine (1) und zur Entölung von aus dem Kurbelgehäuse (11) abgezogenem Entlüftungsgas, mit einer Entlüftungsleitung (20), die das Kurbelgehäuse (11) mit einem Ansaugtrakt (12) der Brennkraftmaschine (1) verbindet, und mit wenigstens einem Ölnebelabscheider (22) zur Abscheidung von Ölnebel aus dem Entlüftungsgas, wobei der Ölnebelabscheider (22) im Verlauf der Entlüftungsleitung (20) angeordnet ist,
**dadurch gekennzeichnet,**
**daß** die Entlüftungsleitung (20) durchgehend einsträngig ist,
**daß** im Verlauf der Entlüftungsleitung (20) ein als schnellschaltendes Rückschlagventil wirkendes Lamellenventil (3) vorgesehen ist, das abhängig vom Gasdruck beiderseits des Lamellenventils (3) eine Gasströmung in einer Richtung vom Kurbelgehäuse (11) zum Ansaugtrakt (12) zuläßt und eine Gasströmung in einer Richtung vom Ansaugtrakt (12) zum Kurbelgehäuse (11) sperrt, und
**daß** im Verlauf der Entlüftungsleitung (20) vom Kurbelgehäuse (11) zum Ansaugtrakt (12) zuerst der Ölnebelabscheider (22), danach das Lamellenventil (3) und danach ein Druckregelventil (24) vorgesehen ist.

3. Einrichtung (2) zur Entlüftung des Kurbelgehäuses (11) einer Brennkraftmaschine (1) und zur Entölung von aus dem Kurbelgehäuse (11) abgezogenem Entlüftungsgas, mit einer Entlüftungsleitung (20), die das Kurbelgehäuse (11) mit einem Ansaugtrakt (12) der Brennkraftmaschine (1) verbindet, und mit wenigstens einem Ölnebelabscheider (22) zur Abscheidung von Ölnebel aus dem Entlüftungsgas, wobei der Ölnebelabscheider (22) im Verlauf der Entlüftungsleitung (20) angeordnet ist,
**dadurch gekennzeichnet,**
**daß** die Entlüftungsleitung (20) durchgehend einsträngig ist,
**daß** im Verlauf der Entlüftungsleitung (20) ein als schnellschaltendes Rückschlagventil wirkendes Lamellenventil (3) vorgesehen ist, das abhängig vom Gasdruck beiderseits des Lamellenventils (3) eine Gasströmung in einer Richtung vom Kurbelgehäuse (11) zum Ansaugtrakt (12) zuläßt und eine Gasströmung in einer Richtung vom Ansaugtrakt (12) zum Kurbelgehäuse (11) sperrt, und
**daß** im Verlauf der Entlüftungsleitung (20) vom Kurbelgehäuse (11) zum Ansaugtrakt (12) zuerst der Ölnebelabscheider (22), danach ein Druckregelventil (24) und danach das Lamellenventil (3) vorgesehen ist.

4. Einrichtung (2) zur Entlüftung des Kurbelgehäuses (11) einer Brennkraftmaschine (1) und zur Entölung von aus dem Kurbelgehäuse (11) abgezogenem Entlüftungsgas, mit einer Entlüftungsleitung (20), die das Kurbelgehäuse (11) mit einem Ansaugtrakt (12) der Brennkraftmaschine (1) verbindet, und mit wenigstens einem Ölnebelabscheider (22) zur Abscheidung von Ölnebel aus dem Entlüftungsgas, wobei der Ölnebelabscheider (22) im Verlauf der Entlüftungsleitung (20) angeordnet ist,
**dadurch gekennzeichnet,**
**daß** die Brennkraftmaschine (1) mehrere Zylinder (10) aufweist,
**daß** im Verlauf der Entlüftungsleitung (20) wenigstens ein als schnellschaltendes Rückschlagventil wirkendes Lamellenventil (3) vorgesehen ist, das abhängig vom Gasdruck beiderseits des Lamellenventils (3) eine Gasströmung in einer Richtung vom Kurbelgehäuse (11) zum Ansaugtrakt (12) zuläßt und eine Gasströmung in einer Richtung vom Ansaugtrakt (12) zum Kurbelgehäuse (11) sperrt, und
**daß** die Entlüftungsleitung (20) zumindest über einen in Richtung vom Kurbelgehäuse (11) zum Ansaugtrakt (12) gesehen letzten Teil ihrer Länge mehrsträngig ausgeführt ist, wobei jedem Zylinder (10) je ein Strang (20') zugeordnet ist und in jedem Strang (20') mindestens ein eigenes Lamellenventil (3) angeordnet ist.

5. Einrichtung (2) zur Entlüftung des Kurbelgehäuses (11) einer Brennkraftmaschine (1) und zur Entölung von aus dem Kurbelgehäuse (11) abgezogenem Entlüftungsgas, mit einer Entlüftungsleitung (20), die das Kurbelgehäuse (11) mit einem Ansaugtrakt (12) der Brennkraftmaschine (1) verbindet, und mit wenigstens einem Ölnebelabscheider (22) zur Abscheidung von Ölnebel aus dem Entlüftungsgas, wobei der Ölnebelabscheider (22) im Verlauf der Entlüftungsleitung (20) angeordnet ist,
**dadurch gekennzeichnet,**
**daß** die Brennkraftmaschine (1) mehrere Zylinder (10) aufweist,
**daß** im Verlauf der Entlüftungsleitung (20) wenigstens ein als schnellschaltendes Rückschlagventil wirkendes Lamellenventil (3) vorgesehen ist, das abhängig vom Gasdruck beiderseits des Lamellenventils (3) eine Gasströmung in einer Richtung vom Kurbelgehäuse (11) zum Ansaugtrakt (12) zuläßt und eine Gasströmung in einer Richtung vom Ansaugtrakt (12) zum Kurbelgehäuse (11) sperrt, und
**daß** die Entlüftungsleitung (20) zumindest über einen in Richtung vom Kurbelgehäuse (11) zum Ansaugtrakt (12) gesehen letzten Teil ihrer Länge mehrsträngig ausgeführt ist, wobei zwei oder mehr Gruppen aus jeweils zwei oder mehr Zylindern (10) je ein Strang (20') zugeordnet ist und in jedem Strang (20') mindestens ein eigenes Lamellenventil (3) angeordnet ist.

6. Einrichtung nach Anspruch 4 oder 5, **dadurch gekennzeichnet, daß** im Verlauf der Entlüftungsleitung (20) vom Kurbelgehäuse (11) zum Ansaugtrakt (12) zuerst der Ölnebelabscheider (22) und danach ein Druckregelventil (24) in einem einsträngigen Abschnitt der Entlüftungsleitung (20) vorgesehen sind und daß danach die Lamellenventile (3) in den mehreren Strängen (20') der Entlüftungsleitung (20) vorgesehen sind.

7. Einrichtung nach einem der Ansprüche 4 bis 6, **dadurch gekennzeichnet, daß** ein die Entlüftungsleitung (20) von einem Strang auf die mehreren Stränge (20') verzweigendes Verteilerstück (21) und die Lamellenventile (3) in den mehreren Strängen (20') in einem mit Leitungsanschlüssen versehenen Bauteil zusammengefaßt sind.

8. Einrichtung nach einem der Ansprüche 1 bis 7, **dadurch gekennzeichnet, daß** jedes Lamellenventil (3) eine einzige, einseitig eingespannte Ventilzunge (31) aufweist.

9. Einrichtung nach einem der Ansprüche 1 bis 7, **dadurch gekennzeichnet, daß** jedes Lamellenventil (3) zwei spiegelsymmetrisch zueinander angeordnete, jeweils einseitig eingespannte Ventilzungen (31) aufweist.

10. Einrichtung nach Anspruch 8 oder 9, **dadurch gekennzeichnet, daß** jeder Ventilzunge (31) ein einen Durchlaßquerschnitt umgrenzender Ventilsitz (34), an den sich die Ventilzunge (31) in ihrer Schließstellung flach anlegt, und ein gebogen und schräg zum Ventilsitz (34) verlaufender Ventilzungenanschlag (35), an den sich die Ventilzunge (31) in ihrer Öffnungsstellung gebogen und flächig anlegt, zugeordnet ist.

11. Einrichtung nach Anspruch 10, **dadurch gekennzeichnet, daß** der Ventilsitz (34) als elastomerbeschichteter Dichtsitz ausgeführt ist.

12. Einrichtung nach einem der Ansprüche 8 bis 11, **dadurch gekennzeichnet, daß** die/jede Ventilzunge (31) aus Federstahlblech in einer Dicke zwischen 0,05 und 0,25 mm besteht.

13. Einrichtung nach einem der Ansprüche 8 bis 11, **dadurch gekennzeichnet, daß** die/jede Ventilzunge (31) aus Epoxydharz, vorzugsweise mit Glasfaserverstärkung, oder faserverstärkten Kunststoffen besteht.

14. Einrichtung nach einem der vorhergehenden Ansprüche, **dadurch gekennzeichnet, daß** die Einrichtung (2) zum Teil oder vollständig in einer Zylinderkopfhaube, im Saugrohr bzw. Ansaugtrakt, in einem Zylinderkopf in einer Ventilhaube, in einem Druckregelventil oder im Ölnebelabscheider oder in einem separaten Modul der Brennkraftmaschine (1) angeordnet bzw. integriert ist.
